# FASCICULE DE BREVET EUROPEEN

(11) **EP 2 241 176 B1**
(45) Date de publication et mention de la délivrance du brevet: **22.08.2012**
(21) Numéro de dépôt: 10161490.7
(22) Date de dépôt: 06.03.2006
(51) Int. Cl.: A01D 43/063

(54) **Dispositif pour le remplissage d'un sac étanche par des éléments véhiculés par un flux généré par un équipement**
Vorrichtung zum Füllen eines dichten Beutels mit Hilfe von Elementen, die durch einen durch ein Gerät erzeugten Fluss angetrieben werden
Device for filling a sealed bag with elements carried by a flow generated by a facility

(30) Priorité: 07.03.2005 FR 0502236
(43) Date de publication de la demande: 20.10.2010
(62) Demande divisionnaire de: 06726032.3
(73) Titulaire: Appert, Sylvain, 78180 Montigny le Bretonneux (FR)
(72) Inventeur: Appert, Sylvain, 78180 Montigny le Bretonneux (FR)
(74) Mandataire: Marconnet, Sébastien

(56) Documents cités:
- GB-A- 2 312 145
- US-A- 3 521 436
- US-A- 4 103 477
- US-A1- 2002 083 694

## Description

La présente invention concerne un dispositif pour le remplissage d'un sac étanche par des éléments véhiculés par un flux généré par un équipement. Elle s'applique plus particulièrement, mais non exclusivement, aux appareils producteurs et/ou collecteurs de déchets végétaux tels que des tondeuses.

Le document US2002/0083694 décrit une tondeuse équipée d'un système de coupe.

De façon générale, la collecte des déchets végétaux se fait dans des récipients, des bacs ou des sacs perméables puis ces déchets doivent être transvasés dans des sacs ou des poubelles qui seront pris en charge par les services d'ordures ménagères.

Or, il s'avère que ce transvasement est souvent malaisé, les bacs étant lourds et difficiles à manipuler. En outre, les conduits à l'intérieur desquels les éléments sont véhiculés ont tendance à s'obturer en cours d'utilisation.

L'invention a pour objet de résoudre cet inconvénient.

A cet effet, l'invention propose un dispositif pour le remplissage d'un récipient d'un équipement par des éléments véhiculés à l'intérieur d'un conduit amenant le flux air/éléments d'une chambre de coupe vers le récipient, caractérisé en ce qu'il comporte des moyens de battage comprenant :
- au moins une lame déformable composée au minimum de la partie inférieure du conduit, et
- au moins un actionneur tournant comportant des moyens pour effectuer une flexion de la lame et la relâcher de manière cyclique.

Selon une réalisation, le dispositif comporte en outre au moins une butée située en dessous de la lame déformable, de sorte que la lame prend appui sur la butée pour fléchir.

Selon une réalisation, l'équipement comportant des roues pour se déplacer, l'actionneur tournant est formé par au moins une protubérance positionnée sur une partie tournante formant au moins un excentrique.

Selon une réalisation, la lame déformable solidaire en son centre d'un pivot est située dans un plan sensiblement horizontal situé sensiblement à la hauteur de l'axe des roues.

Selon une réalisation, le dispositif comporte au moins une butée située à l'une et/ou l'autre des extrémités du bord inférieur d'un panneau d'entrée du flux air/éléments.

L'invention concerne en outre une tondeuse comportant un dispositif pour le remplissage selon l'invention.

Selon une réalisation ledit dispositif pourra comporter des moyens de battage externes du sac dans la partie avant du volume de remplissage de manière à améliorer le conditionnement des éléments tout en empêchant l'obturation de l'ouverture du panneau d'entrée du flux air/éléments.

Lesdits moyens de battage pourront, par exemple, être constitués d'une lame flexible avec une butée à chacune de ses extrémités et d'actionneurs.

Ces actionneurs pourront comprendre les roues de l'équipement.

Ils pourront également être actionnés par l'inclinaison de l'équipement lors de virages ou encore manuellement par une action sur une pédale ou à la main.

Selon une réalisation ledit dispositif pourra comprendre des moyens de battage de tout ou partie d'un conduit ayant pour fonction d'amener le flux air/éléments dans le sac. Ainsi, lesdits moyens de battage empêchent que le conduit s'obstrue en décollant puis en réinjectant les éléments dans le flux d'air.

Lesdits éléments pourront notamment être des déchets, des fruits, de la neige, du sable.

Ledit équipement pourra être notamment une tondeuse, une débroussailleuse, une faucheuse, un scarificateur, un broyeur, un aspirateur, un collecteur de fruits.

Des modes d'exécution de l'invention seront décrits ci-après, à titre d'exemples non limitatifs, avec référence aux dessins annexés dans lesquels :
Les figures 1 a et 1b sont des représentations respectivement de face et de côté d'un mode de réalisation du dispositif selon l'invention ;
La figure 2 est une représentation d'une tondeuse équipée d'un dispositif selon l'invention comportant des moyens de battage.
La figure 3 est une représentation en perspective d'un deuxième mode de réalisation du dispositif comportant des panneaux supplémentaires ;
La figure 4 est une représentation d'une variante de la figure 3 montrant des volets ;
La figure 5 est une représentation d'un troisième mode de réalisation du dispositif selon l'invention ;
La figure 6 est une représentation d'un crochet de la figure 5 ;
Les figures 7a, 7b, 7c sont des représentations du fonctionnement des moyens externes de battage d'un sac selon l'invention ;
La figure 8 est une représentation d'un quatrième mode de réalisation du dispositif comportant des panneaux;
La figure 9 est une coupe selon un plan longitudinal d'un cinquième mode de réalisation du dispositif comportant des panneaux avec un volet sur le panneau d'entrée du flux air/éléments;
Les figures 10a et 10b sont des représentations de face et de côté d'un sixième mode de réalisation du dispositif comportant plusieurs volets sur le panneau d'entrée du flux air/éléments ;
La figure 11 est une représentation d'un septième mode de réalisation du dispositif comportant des panneaux ;
La figure 12 est une représentation de côté d'une tondeuse équipée d'une variante du dispositif de la figure 3 ;
La figure 13 est une représentation de côté d'une tondeuse autoportée équipée d'un dispositif selon l'invention comportant des moyens de battage.

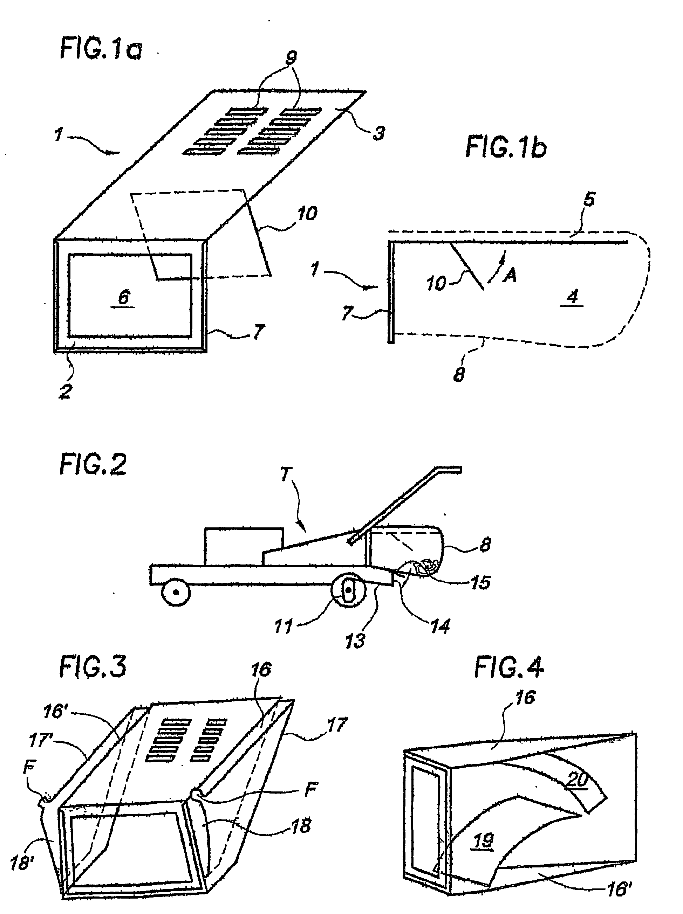

Dans l'exemple des figures 1 a et 1b, le dispositif comporte une structure 1 comprenant deux panneaux de forme rectangulaire perpendiculaires l'un à l'autre, un panneau d'entrée d'un flux air/éléments 2 situé dans un plan sensiblement vertical, un panneau de sortie d'un flux d'air 3 situé dans un plan sensiblement horizontal, un des côtés longitudinaux du panneau 2 étant commun à un des côtés transversaux du panneau 3.

Le dispositif comprend ainsi un volume de remplissage 4 délimité d'une part par les panneaux 2 et 3 et d'autre part par les parois du sac et un volume d'évacuation du flux d'air 5 délimité par le panneau 3 et les parois du sac.

Le panneau 2 présente une ouverture 6 pour permettre l'entrée du flux air/éléments.

Il comporte également sur ses trois côtés non communs au panneau 3 des moyens de fixation d'un sac de collecte 8 d'éléments comprenant un rebord saillant 7.

Il est à noter que le rebord pourra être non saillant et, plus généralement, lesdits moyens de fixation pourront être sur au moins un des côtés.

Le sac pourra être conçu dans une matière recyclable ou en une matière présentant une certaine souplesse et/ou élasticité.

Le panneau 3 comporte dans sa partie opposée (la plus éloignée du) au panneau 2 des orifices 9 destinés à l'évacuation de l'air entré dans le sac 8 avec le flux air/éléments.

Ces orifices pourront par exemple consister en un grillage intégré au panneau ou en des perçages directs du panneau.

Il est à noter que le panneau 3 a également un rôle dans le maintien du sac en position d'utilisation.

De plus, il sépare les volumes de remplissage et d'évacuation et le remplissage du sac contribue à l'étanchéité entre lesdits volumes, le sac sous l'effet du poids des éléments vient au contact des bords du panneau 3.

En outre, ses angles pourront être prévus par exemple arrondis afin de ne pas déchirer le sac ou sa forme pourra avoir tout autre forme compatible avec l'insertion dans le sac telle que trapézoïdale, semi-circulaire ou semi-ovale.

Un volet 10 de forme rectangulaire avec un côté fixé au niveau de la partie avant du panneau 3 et le côté opposé libre orienté vers l'arrière du panneau 3, le volet 10 et le panneau 3 formant un angle maximum de 90°. Ce volet oriente le flux air/éléments et modifie la trajectoire d'éléments susceptibles de transpercer le sac tout en absorbant l'énergie cinétique desdits éléments. L'angle formé par le volet 10 avec le panneau 3 se réduit au fur et à mesure du remplissage dudit sac selon la flèche A représentée sur la figure 1b, l'absorption de l'énergie cinétique étant alors réalisée par les éléments amassés.

Le volet pourra avoir une forme différente dans la mesure où sa fonction est réalisée.

Le dispositif selon l'invention comprend des moyens de battage externe comportant deux cames 11 montées chacune sur une des roues arrière 12 d'un équipement par exemple une tondeuse T (Figure 2). Chaque came 11 entraîne un axe sensiblement horizontal 13 terminé par un axe vertical 14 sur lequel est articulé l'extrémité d'une lame flexible 15 reliant les deux axes verticaux 14, les dimensions de ces axes permettant de placer la lame flexible 15 sous la partie avant du sac 8.

Le dispositif ainsi décrit est fixé à l'arrière de la tondeuse T, selon des normes établies par le fabricant, au niveau du panneau 2 de sorte que l'ouverture 6 se trouve vis-à-vis de la sortie des déchets végétaux de la tondeuse. Ainsi, le flux air/déchets s'engouffre dans l'ouverture avant d'être orienté vers la partie arrière du sac par le volet 10 : le flux va se heurter aux parois du sac au niveau de la partie arrière entraînant le dépôt des déchets puis l'évacuation de l'air par les orifices 9.

Dans le même temps, la tondeuse roulant, la lame flexible 15 vient battre le sac 8 au niveau de sa partie avant de façon à permettre l'introduction d'une plus grande quantité de déchets et à empêcher l'obturation de l'ouverture 6.

La figure 3 illustre un mode de réalisation du dispositif où la structure 1 comprend outre les panneaux d'entrée 2 et de sortie 3, des panneaux complémentaires biseautés 16, 16' situés dans des plans sensiblement verticaux perpendiculaires au panneau d'entrée 2 et au panneau de sortie 3 de façon à renforcer ladite structure 1.

Chaque panneau complémentaire 16, 16' comporte un deuxième panneau parallèle 17, 17', comprenant des moyens F de fixation du sac, de façon à former un V dont le sommet se situe du côté du volume d'évacuation de façon à former des canaux 18, 18' d'évacuation du flux d'air, lesdits canaux 18, 18' et le volume d'évacuation du flux d'air 5 formant un unique canal d'évacuation dudit flux.

Il est à noter que les moyens de fixation F pourront se situer sur le panneau d'entrée 2 par exemple aux extrémités de son côté supérieure.

Avantageusement, les panneaux 17, 17' de la figure 3 vont favoriser le maintien en position du sac.

En effet, la relative élasticité due à leur forme engendre un maintien du sac pouvant être accru par un pincement du sac entre le moyeu du côté intérieur des roues et lesdits panneaux 17, 17' ou un enroulement du sac sur les panneaux 17, 17' ou encore un poinçonnage du sac par des pièces en saillie de diverses formes situées sur lesdits panneaux.

La figure 4 est une représentation d'une variante de la figure 3 avec seulement comme panneaux complémentaires les panneaux 16, 16' et illustrant l'utilisation de deux volets flexibles 19, 20 chacun étant situé sur un des panneaux complémentaires, le premier 19 étant orienté selon l'axe longitudinal de la structure 1, le second 20 étant orienté selon l'axe transversal de la structure 1.

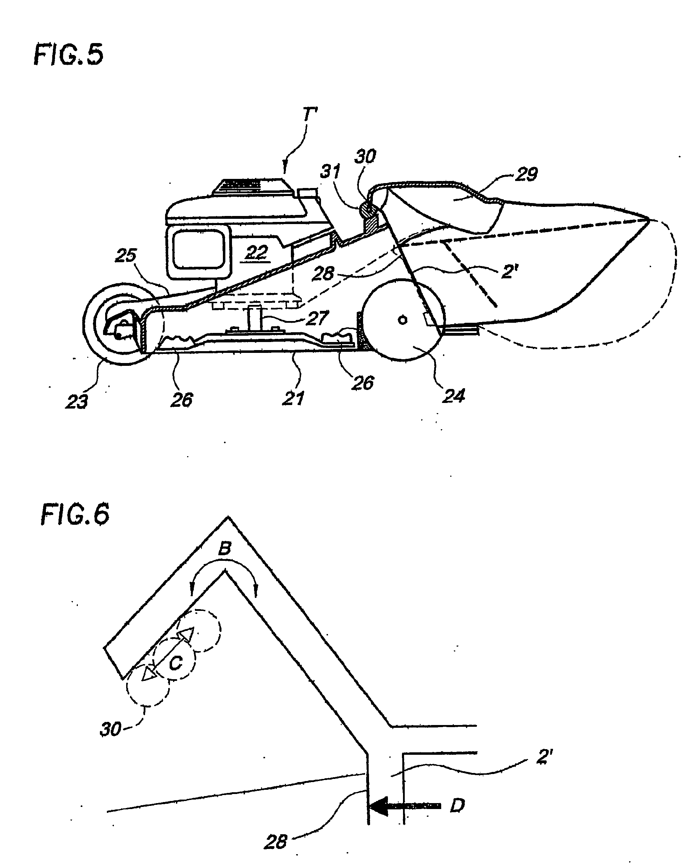

La figure 5 illustre une variante du dispositif selon l'invention où une tondeuse T' intègre ledit dispositif.

Cette tondeuse comporte un châssis porteur 21 muni d'un moteur d'entraînement 22, de deux roues avant 23, deux roues arrière 24 éventuellement motrices et d'un carter de coupe central 25 dans lequel sont montées au moins deux lames rotatives 26 autour d'un axe 27 sensiblement perpendiculaire au sol. Ces deux lames génèrent un flux d'air et de déchets qui est évacué radialement sous l'effet d'une force centrifuge en direction d'un orifice de sortie 28 sur lequel est monté directement le dispositif selon l'invention. Il est à noter que le dispositif pourra être monté indirectement sur ledit orifice 28.

Cette tondeuse T' comprend également un capot de protection 29 au dessus de l'orifice de sortie 28 du flux air/déchets de la tondeuse T'.

Ce capot assure la protection de l'utilisateur lorsque le dispositif et le sac ne sont pas en place : si nécessaire, il absorbe l'énergie cinétique des projectiles tout en les déviant vers le sol.

Ce capot est articulé sur un axe 30 perpendiculaire à l'axe longitudinal de la tondeuse. Lorsqu'il tourne, il est contraint par un ressort, non représenté, situé sur l'axe 30 qui tend à le ramener en position rabattue en exerçant un effort sur le dispositif de manière à pincer le bord du sac sur la tondeuse. Cette position du capot par rapport au dispositif favorise l'étanchéité des compartiments d'évacuation et de remplissage lorsque le sac n'a pas commencé à être rempli.

Les moyens de fixation du dispositif selon l'invention comprennent deux crochets 31 situés à chaque extrémité du bord supérieur du panneau d'entrée 2' du flux air/déchets (Figure 6).

Ces crochets viennent s'accrocher sur l'axe 30 du capot de protection. La liaison crochets/axe laisse aux crochets un certain degré de liberté de rotation autour de l'axe (flèche B) et de translation selon les flèches C de façon à favoriser le déplacement parallèle du panneau d'entrée 2' en appui sur l'orifice 28 de sortie du flux air/déchets de la tondeuse de manière à assurer un contact et plus précisément un pincement (flèche D) du bord du sac situé entre le panneau 2' et la tondeuse.

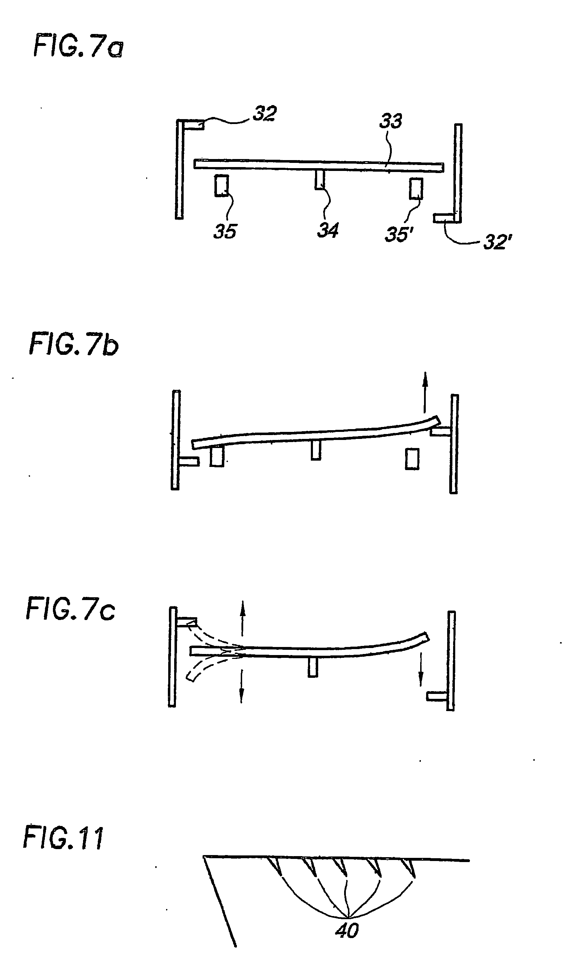

Un autre moyen de battage externe du sac pourra comprendre (Figures 7a-c) :
- sur chaque roue arrière une protubérance parallèle à l'axe de roulement de la roue et formant un excentrique 32, 32', la position de chaque excentrique étant décalée l'une par rapport à l'autre par exemple de 180°,
- une lame 33 solidaire en son centre d'un pivot 34 éventuellement rattaché au bord inférieur du panneau d'entrée du flux air/éléments, située dans un plan horizontal à hauteur de l'axe des roues,
- deux butées 35, 35' chacune étant située à l'une des extrémités du bord inférieur du panneau d'entrée du flux air/éléments.

Le fonctionnement du moyen de battage est une succession de cycles, chaque cycle se déroulant de la façon suivante : l'énergie emmagasinée durant chaque flexion au niveau d'un côté de la lame est transmise à l'autre côté de la lame lorsque celle-ci est libérée effectuant ainsi un battage du sac au niveau de sa partie inférieure avant afin de déplacer les éléments vers la partie arrière du sac.

L'invention ne se limite pas aux exemples précédemment décrits. En effet, le panneau de sortie du flux d'air pourra avoir différentes positions par rapport au panneau d'entrée du flux air/éléments.

En outre, un ou plusieurs volets flexibles et/ou non flexibles pourront être situés sur le panneau d'entrée du flux air/éléments.

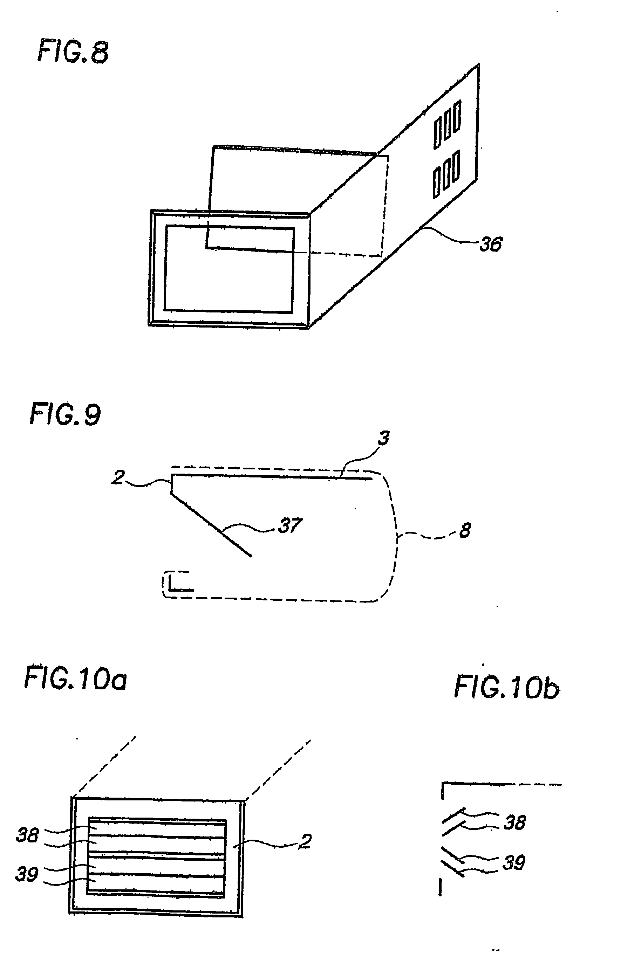

La figure 8 illustre un mode de réalisation du dispositif selon l'invention où le panneau de sortie 36 du flux d'air est situé dans un plan sensiblement vertical perpendiculaire au panneau d'entrée 2.

La figure 9 illustre un mode de réalisation du dispositif selon l'invention vue en coupe selon un plan longitudinale où le volet 37 orientant le flux air/éléments est situé sur le panneau d'entrée 2.

Les figures 10a et 10b illustrent un mode de réalisation du dispositif selon l'invention où le panneau d'entrée 2 comporte plusieurs volets, les volets 38 situés dans la partie supérieure du panneau 2 étant orientés vers l'intérieur du sac et vers le haut, les volets 39 situés dans la partie inférieure du panneau 2 étant orientés vers l'intérieur du sac et vers le bas.

La figure 11 illustre un mode de réalisation du dispositif selon l'invention où les volets sont des lames 40 très courtes s'étendant selon un axe transversal au dispositif.

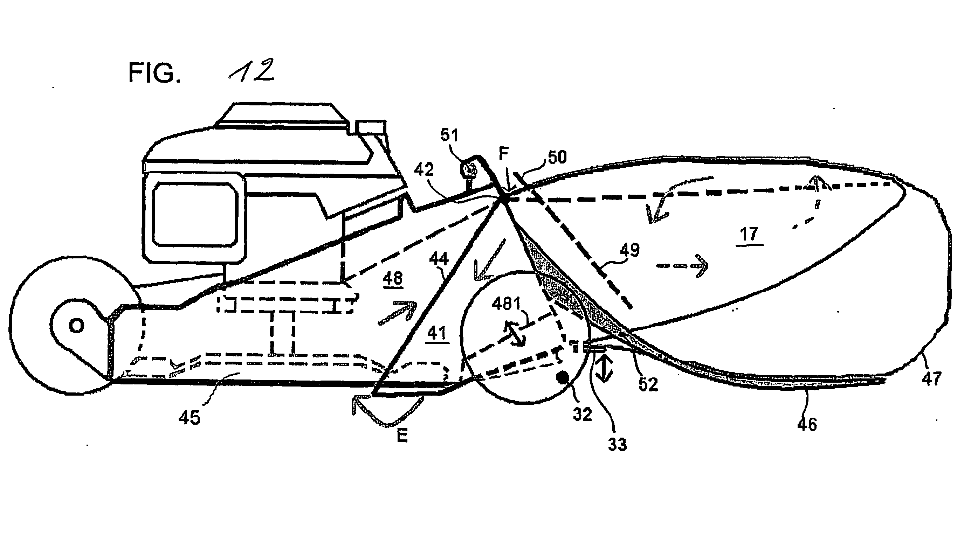

La figure 12 représente une variante du dispositif de la figure 3 dans laquelle les panneaux 17, 17' sont respectivement prolongés par des panneaux déflecteurs 41, 41' reliés au moins au niveau de leur partie supérieure 42 par exemple par un panneau non visible sur la figure, de façon à former un conduit 44 qui canalise le flux d'air sortant et les particules qu'il contient vers le sol (le panneau 17' et le déflecteur 41'correspondant ne sont pas visible sur la figure 12).

Plus précisément, dans cette variante, le flux d'air est canalisé vers l'entrée (flèche E) de la chambre de coupe 45 où il est aspiré.

Il est à noter que chaque panneau 41, 41' peut constituer un élément du dispositif selon l'invention proprement dit c'est-à-dire un seul panneau avec un panneau 17, 17' ou encore constituer un élément de l'équipement sur lequel est monté le dispositif selon l'invention.

Ledit dispositif comprend également un panneau de protection 46 se positionnant sous un sac 47 afin de le protéger des déchirures.

Le dispositif comprend encore des moyens de battage tels que décrits sur les figures 7a à 7c. De plus, au moins les protubérances 32, 32' situées sur les roues viennent actionner un batteur composé au minimum de la partie inférieure 481 d'un conduit 48 amenant le flux air/éléments de la chambre de coupe 45 dans le dispositif selon l'invention afin de favoriser le déplacement des éléments du flux air/éléments vers le volume de remplissage.

Enfin, ledit dispositif comprend un volet 49 qui s'étend à travers le panneau 3 et le sac 47 de façon à ce que sa partie 50, située alors à l'extérieur du volume de remplissage et du sac, soit visible par l'utilisateur.

Une telle conformation de volet présente deux avantages :
- une stabilisation du volet lors de projections,
- une indication du remplissage du sac, lorsque le sac se remplit, le volet tend selon la flèche F vers une position horizontale ; ainsi, la tonte est arrêtée avant que le conduit 48 ne se soit également rempli et que l'utilisateur ne doive mettre les mains dans ledit conduit 48 afin de le vider au risque de se couper.

Ledit dispositif pourra présenter deux types de position : une position d'utilisation, le panneau 3 étant dans un plan horizontal et une position, non représentée, à la fois de rangement et permettant la mise en place d'un sac sur le dispositif, ledit panneau 3 étant alors retourné après une rotation de 180°.

Le passage d'une position à l'autre se fait, par exemple, par rotation du dispositif selon l'invention autour d'un axe horizontal 51.

Il est à noter que, lorsque le dispositif est placé en position de rangement, le panneau de protection 46 pivote selon un axe horizontal 52 pour venir fermer le conduit 48 qui amène le flux air/éléments sortant de la chambre de coupe 45 dans le dispositif afin de protéger l'accès aux lames de la chambre de coupe 45 et ainsi permettre un retournement en toute sécurité en position de rangement.

Bien entendu, l'axe 52 n'est pas nécessaire en cas de système fixe.

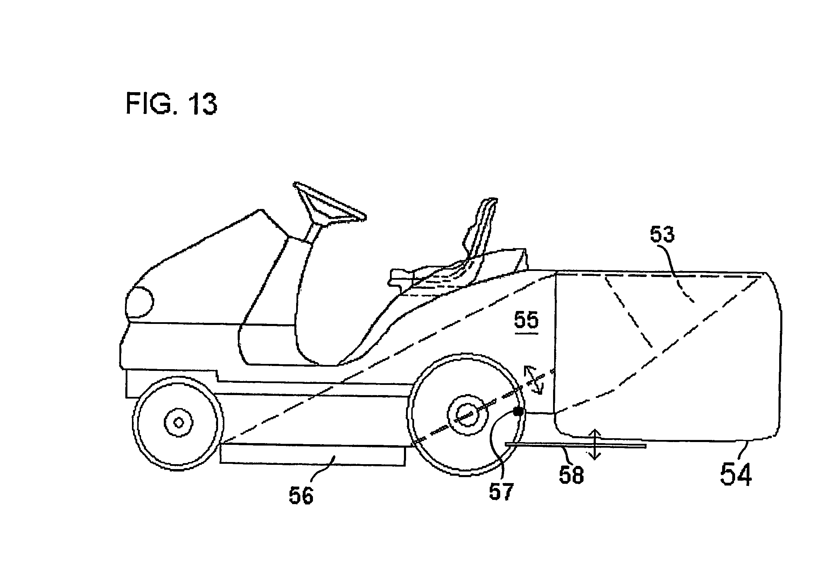

La figure 13 représente une tondeuse autoportée équipée d'un dispositif selon l'invention 53.

Ce dispositif comprend en outre des moyens de battage externe d'un sac 54 et d'un conduit 55 amenant le flux air/éléments sortant de la chambre de coupe 56 dans le dispositif selon l'invention.

Ces moyens de battage comportent notamment des protubérances 57 et une lame 58 respectivement analogues aux protubérances 32 et à la lame 33 de l'exemple des figures 7a à 7c et ils comportent en outre un batteur analogue à celui de la figure 12 c'est-à-dire composé d'une partie du conduit 55.

Parmi les nombreux avantages que présente le dispositif précédemment décrit, on retiendra les suivants :
- un remplissage optimal du sac,
- une sécurité par rapport à d'éventuels projectiles,
- une facilité d'adaptation sur un équipement,
- une facilité d'intégration dans un équipement,
- en raison de l'absence de transfert d'éléments, un gain de temps, moins de dispersion de spores et de graminées (allergènes), une préservation du dos notamment,
- un gain de place pour le rangement,
- une utilisation de matériaux recyclables.

## Revendications

1. Dispositif pour le remplissage d'un récipient d'un équipement par des éléments véhiculés à l'intérieur d'un conduit (48) amenant le flux air/éléments d'une chambre de coupe (45) vers le récipient, **caractérisé en ce qu'**il comporte des moyens de battage (11, 12, 13, 14, 15, 32, 33, 481, 57, 58) comprenant :
- au moins une lame (33) déformable composée au minimum de la partie inférieure (481) du conduit (48), et
- au moins un actionneur tournant (12) comportant des moyens (32, 32') pour effectuer une flexion de la lame (33) et la relâcher de manière cyclique.

2. Dispositif selon la revendication 1, **caractérisé en ce que** il comporte en outre au moins une butée (35, 35') située en dessous de la lame (33) déformable, de sorte que la lame (33) prend appui sur la butée (35, 35') pour fléchir.

3. Dispositif selon la revendication 1 ou 2, **caractérisé en ce que**, l'équipement comportant des roues pour se déplacer, l'actionneur tournant (12) est formé par au moins une protubérance positionnée sur une partie tournante formant au moins un excentrique (32, 32').

4. Dispositif selon l'une des revendications 1 à 3, **caractérisé en ce que** la lame déformable (33) solidaire en son centre d'un pivot (34) est située dans un plan sensiblement horizontal situé sensiblement à la hauteur de l'axe des roues.

5. Dispositif selon l'une des revendications 1 à 4, **caractérisé en ce qu'**il comporte au moins une butée (35, 35') située à l'une et/ou l'autre des extrémités du bord inférieur d'un panneau d'entrée du flux air/éléments.

6. Tondeuse comportant un dispositif pour le remplissage défini selon l'une des revendications précédentes.

## Claims

1. Device for filling a container of an equipment by elements conveyed through a channel (48) transporting the flow of air/elements from a cutting chamber (45) to the container, **characterized in that** it comprises treshing means (11, 12, 13, 14, 15, 32, 33, 481, 57, 58) including:
- at least one deformable blade (33) composed of at least the lower part (481) of the channel (48), and
- at least one rotating actuator (12) comprising means (32, 32') for bending and releasing the blade (33) in a cyclic manner.

2. Device according to claim 1, **characterized in that** it further comprises at least one stop (35, 35') under the deformable blade (33) so that the blade (33) is supported by the stop (35, 35') for bending.

3. Device according to claim 1 or 2, **characterized in that**, as the equipment comprises wheels for moving, the rotating actuator (12) is formed by at least one protuberance positioned on a rotating part forming at least one eccentric (32, 32').

4. Device according to any claim 1 to 3, **characterized in that** the deformable blade (33), linked at its center with a pivot (34), is located in a substantially horizontal plane located substantially level with the axis of the wheels.

5. Device according to any claim 1 to 4, **characterized in that** it comprises at least one stop (35, 35') located at the one and/or the other end of the inferior edge of a panel for the entrance the flow of air/elements.

6. Mower comprising a filling device according to anyone of the preceding claims.

## Patentansprüche

1. Vorrichtung zum Füllen eines Behälters einer Anlage von durch eine Leitung (48) beförderten Elementen, welche den Fluss Luft/Elemente von einem Ausschnittraum (45) zum Behälter transportiert, **dadurch gekennzeichnet, dass** sie Schlagmittel (11, 12, 13, 14, 15, 32, 33, 481, 57, 58), enthaltend:
- mindestens eine verformbare Schneide (33) aus mindestens dem unteren Teil (481) der Leitung (48), und
- mindestens ein drehendes Betätigungsgerät (12), welches Mittel (32, 32') für das Verbiegen und das Freigeben der Schneide (33) in einer zyklischen Weise enthält.

2. Vorrichtung nach Anspruch 1, **dadurch gekennzeichnet, dass** sie weiter mindestens einen Anschlag (35, 35') unter der verformbaren Schneide (33) enthält, so dass sich die verformbare Schneide (33) auf den Anschlag (35, 35') zum Verbiegen stützt.

3. Vorrichtung nach Anspruch 1 oder 2, **dadurch gekennzeichnet, dass**, da die Anlage Räder für das Bewegen enthält, das drehende Betätigungsgerät (12) durch mindestens eine Protuberanz auf einem drehenden, mindestens einen Exzentriker (32, 32') bildenden Teil gebildet wird.

4. Vorrichtung nach einem der Ansprüche 1 bis 3, **dadurch gekennzeichnet, dass** sich die verformbare Schneide (33) aus einem Stück in ihre Mitte mit einem Drehzapfen (34) in einer im wesentlichen Horizontalebene im wesentlichen auf gleicher Höhe mit der Räderachse befindet.

5. Vorrichtung nach einem der Ansprüche 1 bis 4, **dadurch gekennzeichnet, dass** sie mindestens einen Anschlag (35, 35') an dem einen und/oder an dem anderen Ende des Unterrandes einer Einlassplatte für den Fluss Luft/Elemente enthält.

6. Mäher mit einer Füllvorrichtung nach einem der vorausgegangenen Ansprüche.
